# EUROPÄISCHE PATENTSCHRIFT

(11) **EP 2 724 044 B1**
(45) Veröffentlichungstag und Bekanntmachung des Hinweises auf die Patenterteilung: **09.05.2018**
(21) Anmeldenummer: 12734780.5
(22) Anmeldetag: 22.05.2012
(51) Int. Cl.: F16D 25/12

(54) **DREHMOMENTÜBERTRAGUNGSEINRICHTUNG**
TORQUE TRANSMISSION DEVICE
DISPOSITIF DE TRANSMISSION DE COUPLE DE ROTATION

(30) Priorität: 21.06.2011 DE 102011122788
(43) Veröffentlichungstag der Anmeldung: 30.04.2014
(73) Patentinhaber: Schaeffler Technologies AG & Co. KG, 91074 Herzogenaurach (DE)
(72) Erfinder: KÜHNLE, Michael, 77815 Bühl (DE); SCHNÄDELBACH, David, 76534 Baden-Baden-Neuweier (DE)
(86) Internationale Anmeldenummer: PCT/DE2012/000521
(87) Internationale Veröffentlichungsnummer: WO 2012/175060

(56) Entgegenhaltungen:
- EP-A1- 1 541 887
- EP-A1- 1 584 830
- WO-A1-03/036118
- WO-A1-2007/016899

## Beschreibung

Die Erfindung betrifft eine Drehmomentübertragungseinrichtung mit den Merkmalen gemäß dem Oberbegriff von Anspruch 1, wie zum Beispiel im Dokument EP 1 584 830 A1 offenbart ist. Derartige Drehmomentübertragungseinrichtungen sind allgemein bekannt. Dabei weisen solche Drehmomentübertragungseinrichtungen in einem Antriebsstrang eines Kraftfahrzeugs eine in einem Gehäuse aufgenommenen Kupplungseinrichtung mit einem Reibbereich zur reibschlüssigen Verbindung einer Antriebsseite, beispielsweise einer Brennkraftmaschine mit einer Abtriebsseite, beispielsweise einem Getriebe auf. Das Gehäuse ist mit einem Fluid gefüllt und zur Kühlung des Reibbereichs der Kupplungseinrichtung ist durch eine erste Durchlassöffnung eine Zuführung von Fluid in das Gehäuse und durch eine zweite Durchlassöffnung ein Abfluss von Fluid aus dem Gehäuse möglich. Dadurch wird ein Kühlfluidstrom gebildet, der den Reibbereich durchströmt.

Bei bestimmten Betriebszuständen der Kupplungseinrichtung reicht dieser Kühlfluidstrom und dessen Wärmeabfuhrvermögen nicht aus, den Reibbereich ausreichend zu kühlen.

Aufgabe der Erfindung ist es, die Kühlung einer Kupplungseinrichtung zu verbessern.

Erfindungsgemäß wird diese Aufgabe durch eine Drehmomentübertragungseinrichtung mit den Merkmalen gemäß Anspruch 1 gelöst.

Entsprechend wird eine Drehmomentübertragungseinrichtung in einem Antriebsstrang eines Kraftfahrzeugs mit einer um eine Drehachse drehbaren und in einem Gehäuse aufgenommenen Kupplungseinrichtung mit einem Reibbereich zur reibschlüssigen Verbindung einer Antriebsseite mit einer Abtriebsseite und einer zur Zuführung von Fluid in das Gehäuse vorgesehenen ersten Durchlassöffnung und einer zum Abfluss von Fluid aus dem Gehäuse vorgesehenen zweiten Durchlassöffnung und einem die erste und zweite Öffnung passierenden und den Reibbereich durchströmenden ersten Kühlfluidstrom zur Kühlung des Reibbereichs vorgeschlagen wobei der Reibbereich von einem zweiten Kühlfluidstrom durchströmt wird, der in dem Gehäuse zirkuliert, vorrangig unter Umgehung eines Durchtritts durch die erste und zweite Durchlassöffnung. Dadurch kann eine verbesserte und anpassbare Kühlung des Reibbereichs der Kupplungseinrichtung erreicht werden. Vorrangig bedeutet, es kann ein geringerer als der im Gehäuse zirkulierende Teil des zweiten Kühlfluidstroms durch eine oder beide Durchlassöffnungen fließen oder auch gar keiner.

In einer besonders vorteilhaften, speziellen Ausgestaltung der Erfindung hängt die Stärke des zweiten Kühlfluidstroms von einem Drehzahlverhältnis zwischen Antriebsseite und Abtriebsseite ab. Erfindungsgemäß wird zwischen dem Reibbereich und der ersten Durchlassöffnung ein erster Strömungsweg gebildet und zwischen dem Reibbereich und der zweiten Durchlassöffnung ein zweiter Strömungsweg gebildet, wobei der Kupplungseinrichtung ein Trennbereich zugeordnet ist, der die beiden Strömungswege im Wesentlichen voneinander trennt, so dass der überwiegende Anteil des den ersten Strömungsweg passierenden Kühlfluidstroms den Reibbereich durchströmt. Erfindungsgemäß kann der Trennbereich zur Trennung des ersten Strömungswegs und des zweiten Strömungswegs bei einem bestimmten Drehzahlverhältnis teilweise geöffnet oder geschlossen werden, so dass wenigstens ein Teil des zweiten Kühlfluidstroms durch den Trennbereich fließen kann.

In einer weiteren speziellen Ausführung der Erfindung ist an dem Trennbereich ein Ventil angeordnet, das in Abhängigkeit eines Differenzdrucks zwischen einer ersten Seite des Trennbereichs und einer zweiten Seite des Trennbereichs einen Durchfluss ermöglicht oder verringert oder sperrt. Vorteilhafterweise ändert sich der Öffnungszustand des Ventils in Abhängigkeit des Drehzahlverhältnisses.

In einer weiteren speziellen Ausführung der Erfindung kann durch ein der Kupplungseinrichtung zugeordnetes oder daran angeordnetes Bauteil eine Fluidförderwirkung erreicht werden. Vorzugsweise wird der zweite Kühlfluidstrom durch die Fluidförderwirkung unterstützend angetrieben.

In einer weiteren speziellen Ausführung der Erfindung durchströmt der Kühlfluidstrom den Reibbereich von radial innen nach radial außen, kann aber auch von radial außen nach radial innen strömen.

In einer bevorzugten Ausgestaltung der Erfindung ist eine dritte Durchlassöffnung zur Betätigung eines Kolbens der Kupplungseinrichtung vorgesehen.

Allgemein kann die Drehmomentübertragungseinrichtung als Kupplungseinrichtung, beispielsweise als nasslaufende oder trocken laufende Kupplungseinrichtung, die wiederum jeweils eine einfache Anfahrkupplung, Getriebekupplung oder Doppelkupplungseinrichtung sein kann und/oder als Torsionsschwingungsdämpfer und/oder als Zweimassenschwungrad ausgebildet sein und/oder an und/oder in einem hydrodynamischen Drehmomentwandler angeordnet sein.

Weitere Vorteile und vorteilhafte Ausgestaltungen der Erfindung ergeben sich aus der Beschreibung und den Abbildungen, bei deren Darstellung zugunsten der Übersichtlichkeit auf eine maßstabsgetreue Wiedergabe verzichtet wurde. Alle erläuterten Merkmale sind nicht nur in der angegebenen Kombination, sondern auch in anderen Kombinationen beziehungsweise in Alleinstellung anwendbar, ohne den Rahmen der Erfindung zu verlassen.

Die Erfindung wird im Folgenden unter Bezugnahme auf die Abbildungen ausführlich beschrieben. Es zeigen im Einzelnen:
- Figur 1:: Schematische Querschnittsansicht einer Drehmomentübertragungseinrichtung in einer speziellen Ausführungsform der Erfindung in einem ersten Betriebszustand der Kupplungseinrichtung.
- Figur 2:: Schematische Querschnittsansicht einer Drehmomentübertragungseinrichtung in einer speziellen Ausführungsform der Erfindung in einem zweiten Betriebszustand der Kupplungseinrichtung.
- Figur 3:: Querschnitt eines Ausschnitts einer Drehmomentübertragungseinrichtung in einer weiteren speziellen Äusführungsform der Erfindung.
- Figur 4:: Räumliche Ansicht eines Ausschnitts der Drehmomentübertragungseinrichtung aus Figur 3. '
- Figur 5:: Räumliche Ansicht eines weiteren Ausschnitts der Drehmomentübertragungseinrichtung aus Figur 3.
- Figur 6:: Querschnitt eines Ausschnitts einer Drehmomentübertragungseinrichtung in einer weiteren speziellen Ausführungsform der Erfindung.
- Figur 7:: Draufsicht auf einen Ausschnitt der Drehmomentübertragungseinrichtung aus Figur 6.
- Figur 8:: Rückansicht des Ausschnitts der Drehmomentübertragungseinrichtung aus Figur 7.

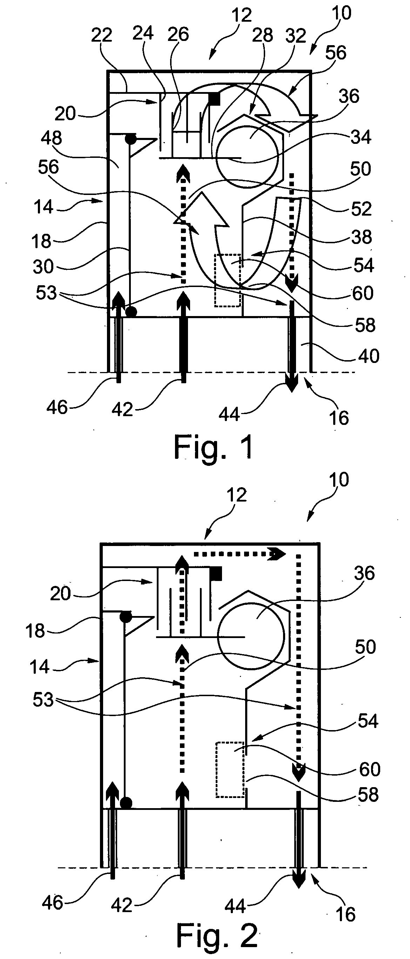

In Figur 1 ist eine schematische Querschnittsansicht einer Drehmomentübertragungseinrichtung 10 in einer speziellen Ausführungsform der Erfindung in einem ersten Betriebszustand der der Drehmomentübertragungseinrichtung zugeordneten Kupplungseinrichtung 12 dargestellt. In diesem ersten Betriebszustand ist ein Drehzahlverhältnis zwischen einer Antriebsseite 14 und einer Abtriebsseite 16 ungleich Null, insbesondere ist das Drehzahlverhältnis größer als Eins, das bedeutet die Antriebsseite 14 hat eine größere Drehzahl als die Abtriebsseite 16.

Die Drehmomentübertragungseinrichtung 10 weist eine Kupplungseinrichtung 12 auf, die in einem Gehäuse 18 aufgenommen ist, wobei das Gehäuse 18 mit einem Fluid befüllt ist. Die Kupplungseinrichtung 12 weist weiterhin einen Reibbereich 20 zur reibschlüssigen Verbindung der Antriebsseite 14 mit der Abtriebsseite 16 auf. Dazu ist das Gehäuse 18 mit der Antriebsseite 14 beispielsweise einer Brennkraftmaschine über eine Flexplate verbindbar. Innerhalb des Gehäuses 18 und drehfest mit diesem ist ein Aussenlamellenträger 22 drehfest verbunden, der über eine Verzahnung axial gegenüber diesem verschiebbare Antriebsreiblamellen 24 drehfest aufnimmt. Die Antriebsreiblamellen 24 können Reibbeläge aufweisen, die bei geschlossener Kupplung mit Abtriebsreiblamellen 26 in Eingriff gebracht werden können.

Die Abtriebsreiblamellen 26 sind über eine Verzahnung drehfest und axial verschiebbar gegenüber einem Innenlamellenträger 28 angeordnet. Der Reibbereich der Kupplungseinrichtung 12 wird somit wenigstens aus den Antriebsreiblamellen 24, den Reibbelägen und den Abtriebsreiblamellen 26 gebildet. Die Kraftbeaufschlagung der Antriebsreiblamellen 24 und Abtriebsreiblamellen 26 zur Ermöglichung eines gegenseitigen Reibeingriffs erfolgt über einen axial bewegbaren Kolben 30.

An dem Innenlamellenträger 28 ist ein Torsionsschwingungsdämpfer 32 angeordnet, wobei ein Dämpfereingangsteil 34 drehfest mit dem Innenlamellenträger 28 verbunden ist. Das Dämpfereingangsteil 34 ist zur Beaufschlagung von Energiespeicherelementen 36, beispiels-. weise Schraubenfedern, befähigt und kann über die Wirkung der Energiespeicherelemente 36 eine Drehmomentübertragung auf ein Dämpferausgangsteil 38 ermöglichen. Das Dämpferausgangsteil 38 ist damit begrenzt gegenüber dem Dämpfereingangsteil 34 verdrehbar.

Mit dem Dämpferausgangsteil 38 ist eine Getriebeeingangswelle 40 mittelbar oder unmittelbar drehfest verbunden. Die Getriebeeingangswelle 40 oder ein Abtriebsteil der Drehmomentübertragungseinrichtung 10 weist eine erste Durchlassöffnung 42 zur Versorgung des Innenraums des Gehäuses 18 mit einem Fluid und eine zweite Durchlassöffnung 44 zum Abfluss des Fluids aus dem Gehäuse 18 auf. Ebenfalls vorgesehen ist eine separate dritte Durchlassöffnung 46 zur Versorgung mit Fluid eines zwischen dem Kolben 30 und einer Innenwand des Gehäuses 18 gebildeten Raumes 48 zur axialen Verschiebung des Kolbens 30 zur Betätigung der Kupplung.

Zwischen der ersten Durchlassöffnung 42 und dem Reibbereich 20 bildet das durch die erste Durchlassöffnung 42 einströmende Fluid einen Kühlfluidstrom in Form eines ersten Strömungswegs 50. Zwischen dem Reibbereich 20 und der zweiten Durchlassöffnung 44 fließt das Kühlfluid entlang eines zweiten Strömungswegs 52 und durch die zweite Durchlassöffnung 44 aus dem Gehäuse 18. Strömungswirksam zwischen dem ersten und zweiten Strömungsweg 50, 52 weist die Kupplungseinrichtung 12 einen Trennbereich 54 auf, der die beiden Strömungswege 50, 52 im Wesentlichen voneinander trennt, so dass der überwiegende Anteil des den ersten Strömungsweg 50 passierenden Kühlfluidstroms den Reibbereich 20 durchströmen kann.

Der Trennbereich 54 wird durch ein oder mehrere Bauteile des Torsionsschwingungsdämpfers 32 und/oder der Kupplungseinrichtung 12 und/oder durch separate Bauteile gebildet. Vorzugsweise kann das Fluid entlang dem ersten Strömungsweg 50 auf einer Seite des Torsionsschwingungsdämpfers 32 und entlang dem zweiten Strömungsweg 52 auf der jeweils gegenüberliegenden Seite des Torsionsschwingungsdämpfers 32 fließen. Der Kühlfluidstrom kann auch durch eine Fluidförderwirkung eines der Bauteile der Drehmomentübertragungseinrichtung 10, beispielsweise der Reibbeläge des Reibbereichs 20 durch darin eingebrachte Nuten verstärkt werden. Doch ist die Durchflussmenge des Kühlfluidstroms durch die erste und zweite Durchlassöffnung 42, 44 durch die jeweiligen Querschnittsflächen der Durchlassöffnungen begrenzt und kann unter bestimmten Bedingungen für eine ausreichende Kühlung des Reibbereichs 20 zu gering sein.

Aus diesem Grund ist ein das entlang des ersten und zweiten Strömungswegs fließende und einen ersten Kühlfluidstrom beschreibende Kühlfluid ergänzender und innerhalb des Gehäuses 18 zirkulierender zweiter Kühlfluidstrom 56 vorgesehen, der den Reibbereich 20 durchströmt und kühlt, vorrangig unter Umgehung eines Durchtritts durch die erste und zweite Durchlassöffnung 42, 44. Das bedeutet, es kann ein Teil des zweiten Kühlfluidstroms 56 durch eine oder beide Durchlassöffnungen 42, 44 fließen oder auch gär keiner.

Dieser zweite Kühlfluidstrom 56 kann durch die Fluidförderwirkung verstärkt oder überhaupt erst angetrieben werden. Dabei kann das Kühlfluid des zweiten Strömungswegs 52, noch bevor ein Abfluss aus dem Gehäuse 18 durch die zweite Durchlassöffnung 44 erfolgen kann, durch einen Strömungskurzschluss zwischen dem zweiten Strömungsweg 52 und dem ersten Strömungsweg 50 zurückströmen, wobei hierfür eine Öffnung 58 in dem Trennbereich 54 vorgesehen ist. Das durch den Trennbereich 54 hindurch strömende Kühlfluid vermischt sich mit dem ersten Kühlfluidstrom 53 und fließt mit diesem in Richtung und durch den Reibbereich 20. Sobald das Kühlfluid aus dem Reibbereich 20 austritt fließt der erste Kühlfluidstrom 53 und der zweite Kühlfluidstrom 56 gemeinsam in Richtung zweite Durchlassöffnung 44. Doch ein Teil des Kühlfluids zweigt in Richtung und durch die Öffnung 58 in dem Trennbereich 54 ab zur Bildung des zweiten Kühlfluidstroms 56, während ein anderer und dem ersten Kühlfluidstrom 53 zugeordneter Teil das Gehäuse 18 durch die zweite Durchlassöffnung 44 verlässt.

So kann der Trennbereich 54 bei einem bestimmten Drehzahlverhältnis zwischen der Antriebsseite 14 und der Abtriebsseite 16, vorzugsweise bei einem Drehzahlverhältnis größer als Eins teilweise geöffnet werden. Dies kann durch ein dem Trennbereich 54 zugeordnetes Ventil 60 geschehen, womit wenigstens ein Teil des zweiten Kühlfluidstroms 56 durch den Trennbereich 54 fließen kann. Dadurch kann der Reibbereich 20 von dem zweiten Kühlfluidstrom 56 durchströmt werden, dessen Durchflussmenge größer als die des ersten Kühlfluidstroms 53 ist.

Das an dem Trennbereich 54 angeordnete Ventil 60 ermöglicht in Abhängigkeit eines Differenzdrucks zwischen einer ersten Seite des Trennbereichs 54 und einer zweiten Seite des Trennbereichs 54 einen Durchfluss. So hängt die Durchflussmenge von dem Differenzdruck zwischen den beiden Seiten des Trennbereichs 54 ab.

Weiterhin ändert sich der Öffnungszustand des Ventils 60 und damit die durch dieses fließende Menge des zweiten Kühlfluidstroms 56 in Abhängigkeit von dem Drehzahlverhältnis zwischen Antriebsseite 14 und Abtriebsseite 16. Damit kann der zweite Kühlfluidstrom 56 unter gewissen Bedingungen und in Abhängigkeit von dem Drehzahlverhältnis reguliert werden und damit die Kühlleistung des den Reibbereich 20 durchströmenden Kühlfluids.

Figur 2 zeigt eine schematische Querschnittsansicht einer Drehmomentübertragungseinrichtung 10 in einer speziellen Ausführungsform der Erfindung in einem zweiten Betriebszustand der Kupplungseinrichtung 12. Der zweite Betriebszustand entspricht dabei einem Drehzahlverhältnis zwischen Antriebsseite 14 und Abtriebsseite 16 von Null, das bedeutet, die Antriebsseite 14 und die Abtriebsseite 16 drehen mit gleicher Drehzahl oder drehen sich beide zugleich nicht.

In diesem Zustand ist das Ventil 60 an dem Trennbereich 54 geschlossen, womit vorrangig der erste Kühlfluidstrom 53 in dem Gehäuse 18 vorherrscht. Der Reibbereich 20 wird somit fast ausschließlich durch den ersten Kühlfluidstrom 53 gekühlt.

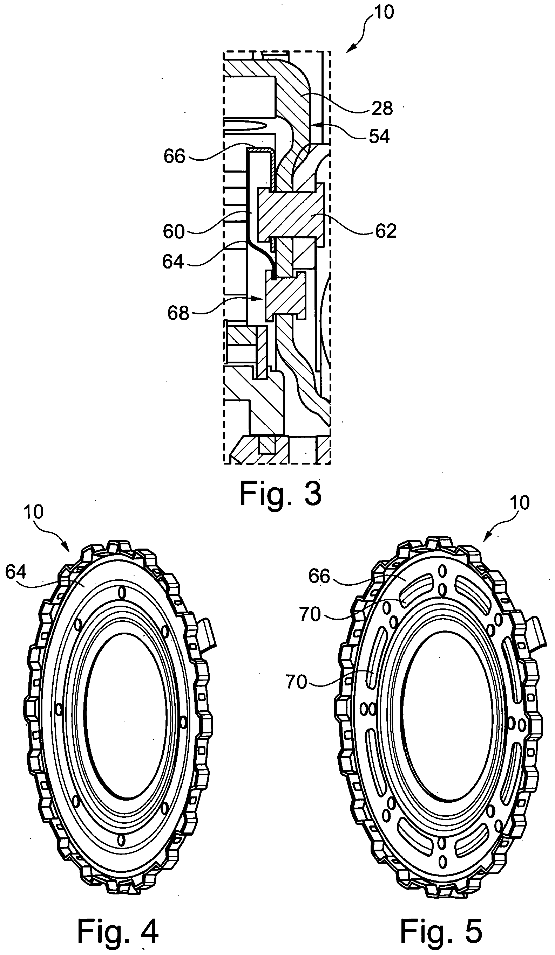

In Figur 3 ist ein Querschnitt eines Ausschnitts einer Drehmomentübertragungseinrichtung 10 in einer weiteren speziellen Ausführungsform der Erfindung dargestellt. Der Trennbereich 54 wird durch den radial nach innen verlaufenden und an einer radialen Innenseite vorzugsweise abgedichteten Innenlamellenträger 28 gebildet. Das Ventil 60 zur Begrenzung und Steuerung des zweiten Kühlfluidstroms 56 ist über ein Nietelement 62 mit dem Trennbereich 54, speziell mit einem Innenlamellenträger 28 drehfest verbunden. Dabei wird das Ventil 60 durch ein federndes, ringförmiges Blechelement 64 gebildet, das an einem Begrenzungselement 66 anliegen kann. Dazu ist der Schwerpunkt des Blechelements 64 zu der Anbindungsstelle 68 an dem Nietelement 62 axial versetzt womit sich unter radial gerichteter Fliehkrafteinwirkung eine axiale Anlagekraft des Blechelements 64 ergibt. Durch diese Anlagekraft wird das Blechelement 64 an das Begrenzungselement 66 gedrückt.

Figur 4 und 5 zeigen jeweils räumliche Ansichten eines Ausschnitts der Drehmomentübertragungseinrichtung 10 aus Figur 3. Figur 5 entspricht dabei Figur 4, nur dass hier das Blechelement 64 ausgeblendet wurde. Das Begrenzungselement 66 weist auf der dem zweiten Strömungsweg zugewandten Seite umfangsseitig versetzt zueinander angeordnete Öffnungen 70 zur Durchströmung mit Fluid auf. Sobald das Blechelement 64 an dem Begrenzungselement 66 anliegt, ist zwar ein Durchgang zu dem zweiten Strömungsweg durch die Öffnungen 70 gegeben, aber es wird kein Durchgang oder nur ein stark verringerter Durchgang von Fluid zum ersten Strömungsweg ermöglicht. Es ist auch denkbar, zwischen dem Blechelement 64 und dem Begrenzungselement 66 eine Dichtung zur besserer Abdichtung vorzusehen.

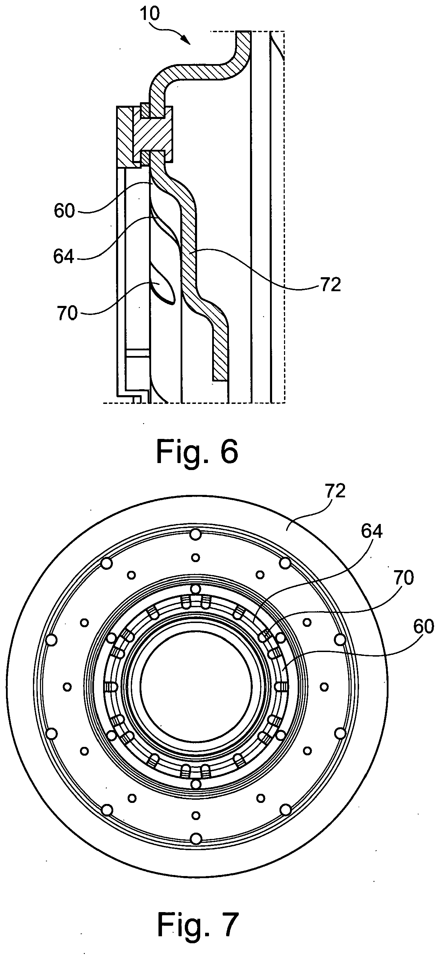

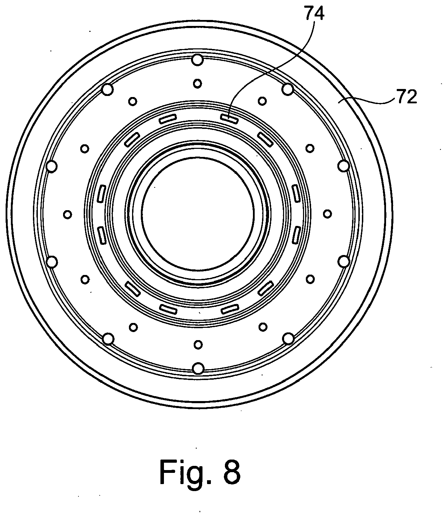

Wie in Figur 6, 7 und 8 dargestellt, kann das Blechelement 64 des Ventils 60 auch direkt an einem ohnehin vorhandenen, hier beispielsweise einem Bauteil 72 des Torsionsschwingungsdämpfers 32 zur Anlage kommen. Dabei weist dieses ringförmige Blechelement 64 umfangsseitig versetzt angeordnete Öffnungen 70 auf, durch die das Fluid auch bei anliegendem Blechelement 64 durchströmen kann, allerdings in geringerem Umfang, als wenn das Ventil 60 offen wäre, das bedeutet wenn das Blechelement 64 nicht anliegen würde. Auch dieses Ventil 60 ist durch die Anbringung und Ausgestaltung des Blechelements 64 drehzahlabhängig betätigbar, das bedeutet je größer die Drehzahl des Blechelements 64 ist, desto stärker liegt dieses an. Auch weist das Bauteil 72 umfangsseitig verteilt angeordnete Öffnungen 74 auf, durch die das Kühlfluid vom zweiten Strömungsweg in Richtung Ventil 60 fließen kann.

## Patentansprüche

1. Drehmomentübertragungseinrichtung (10) in einem Antriebsstrang eines Kraftfahrzeugs mit einer um eine Drehachse drehbaren und in einem Gehäuse (18) aufgenommenen Kupplungseinrichtung (12) mit einem Reibbereich (20) zur reibschlüssigen Verbindung einer Antriebsseite (14) mit einer Abtriebsseite (16) und einer zur Zuführung von Fluid in das Gehäuse (18) vorgesehenen ersten Durchlassöffnung (42) und einer zum Abfluss von Fluid aus dem Gehäuse (18) vorgesehenen zweiten Durchlassöffnung (44) und einem die erste und zweite Öffnung passierenden und den Reibbereich (20) durchströmenden ersten Kühlfluidstrom (53) zur Kühlung des Reibbereichs (20),
wobei der Reibbereich (20) von einem zweiten Kühlfluidstrom (56) durchströmt wird, der in dem Gehäuse (18) zirkuliert, vorrangig unter Umgehung eines Durchtritts durch die erste und zweite Durchlassöffnung (42, 44) wobei zwischen dem Reibbereich (20) und der ersten Durchlassöffnung (42) ein erster Strömungsweg (50) gebildet wird und zwischen dem Reibbereich (20) und der zweiten Durchlassöffnung (44) ein zweiter Strömungsweg (52) gebildet wird, wobei der Kupplungseinrichtung (12) ein Trennbereich (54) zugeordnet ist, der die beiden Strömungswege im Wesentlichen voneinander trennt, so dass der überwiegende Anteil des den ersten Strömungsweg (50) passierenden Kühlfluidstroms den Reibbereich (20) durchströmt
**dadurch gekennzeichnet, dass**
der Trennbereich (54) zur Trennung des ersten Strömungswegs (50) und des zweiten Strömungswegs (52) bei einem bestimmten Drehzahlverhältnis zwischen der Antriebsseite (14) und der Abtriebsseite (16) teilweise geöffnet oder geschlossen werden kann, so dass wenigstens ein Teil des zweiten Kühlfluidstroms (56) durch den Trennbereich fließen kann.

2. Drehmomentübertragungseinrichtung nach Anspruch 1, **dadurch gekennzeichnet, dass** an dem Trennbereich (54) ein Ventil (60) angeordnet ist, das in Abhängigkeit eines Differenzdrucks zwischen einer ersten Seite des Trennbereichs (54) und einer zweiten Seite des Trennbereichs (54) einen Durchfluss ermöglicht oder verringert oder sperrt.

3. Drehmomentübertragungseinrichtung nach Anspruch 2, **dadurch gekennzeichnet, dass** die Stärke des zweiten Kühlfluidstroms (56) von einem Drehzahlverhältnis zwischen Antriebsseite (14) und Abtriebsseite (16) abhängt und sich der Öffnungszustand des Ventils (60) in Abhängigkeit des Drehzahlverhältnisses ändert.

4. Drehmomentübertragungseinrichtung nach Anspruch 1 bis 3, **dadurch gekennzeichnet, dass** durch ein der Kupplungseinrichtung zugeordnetes oder daran angeordnetes Bauteil eine Fluidförderwirkung erreicht werden kann.

5. Drehmomentübertragungseinrichtung nach Anspruch 4, **dadurch gekennzeichnet, dass** der zweite Kühlfluidstrom durch die Fluidförderwirkung unterstützend angetrieben wird.

6. Drehmomentübertragungseinrichtung nach Anspruch 1 bis 5, **dadurch gekennzeichnet, dass** der Kühlfluidstrom den Reibbereich (20) von radial innen nach radial außen durchströmt.

7. Drehmomentübertragungseinrichtung nach Anspruch 1 bis 6, **dadurch gekennzeichnet, dass** eine dritte Durchlassöffnung (46) zur Betätigung eines Kolbens (30) der Kupplungseinrichtung (12) vorgesehen ist.

## Claims

1. Torque transmission device (10) in a drive train of a motor vehicle having a clutch device (12) which can be rotated about a rotational axis and is received in a housing (18), with a friction region (20) for connecting a drive side (14) to an output side (16) in a frictionally locking manner, and a first passage opening (42) which is provided for feeding fluid into the housing (18), and a second passage opening (44) which is provided for discharging fluid from the housing (18), and a first cooling fluid flow (53) which passes the first and second opening and flows through the friction region (20) in order to cool the friction region (20), the friction region (20) being flowed through by a second cooling fluid flow (56) which circulates in the housing (18), predominantly bypassing a passage through the first and second passage opening (42, 44), a first flow path (50) being formed between the friction region (20) and the first passage opening (42), and a second flow path (52) being formed between the friction region (20) and the second passage opening (44), the clutch device (12) being assigned a disconnecting region (54) which disconnects the two flow paths substantially from one another, with the result that the predominant portion of the cooling fluid flow which passes the first flow path (50) flows through the friction region (20), **characterized in that** the disconnecting region (54) can be partially opened or closed in order to disconnect the first flow path (50) and the second flow path (52) in the case of a defined rotational speed ratio between the drive side (14) and the output side (16), with the result that at least part of the second cooling fluid flow (56) can flow through the disconnecting region.

2. Torque transmission device according to Claim 1, **characterized in that** a valve (60) is arranged on the disconnecting region (54), which valve (60) enables or reduces or shuts off a throughflow in a manner which is dependent on a differential pressure between a first side of the disconnecting region (54) and a second side of the disconnecting region (54).

3. Torque transmission device according to Claim 2, **characterized in that** the magnitude of the second cooling fluid flow (56) is dependent on a rotational speed ratio between the drive side (14) and the output side (16), and the opening state of the valve (60) changes in a manner which is dependent on the rotational speed ratio.

4. Torque transmission device according to Claims 1 to 3, **characterized in that** a fluid conveying effect can be achieved by way of a component which is assigned to the clutch device or is arranged on the latter.

5. Torque transmission device according to Claim 4, **characterized in that** the second cooling fluid flow is driven in an assisting manner by way of the fluid conveying effect.

6. Torque transmission device according to Claims 1 to 5, **characterized in that** the cooling fluid flow flows through the friction region (20) from the radial inside to the radial outside.

7. Torque transmission device according to Claims 1 to 6, **characterized in that** a third passage opening (46) is provided for actuating a piston (30) of the clutch device (12).

## Revendications

1. Dispositif (10) de transmission d'un couple de rotation dans le train d'entraînement d'un véhicule automobile, présentant un dispositif d'embrayage (12) apte à tourner autour d'un axe de rotation, repris dans un carter (18) et présentant une zone de frottement (20) assurant la liaison par frottement entre le côté d'entraînement (14) et le côté entraîné (16), une première ouverture de passage (42) prévue pour amener du fluide dans le carter (18) et une deuxième ouverture de passage (44) prévue pour évacuer le fluide hors du carter (18) et un premier écoulement (53) de fluide qui passe par la première et la deuxième ouverture et qui traverse la zone de frottement (20) en vue de refroidir la zone de frottement (20),
la zone de frottement (20) étant traversée par un deuxième écoulement (56) de fluide de refroidissement qui circule dans le carter (18) en contournant prioritairement une traversée de la première et de la deuxième ouverture de passage (42, 44),
un premier parcours d'écoulement (50) étant formé entre la zone de frottement (20) et la première ouverture de passage (42) et un deuxième parcours d'écoulement (52) étant formé entre la zone de frottement (20) et la deuxième ouverture de passage (44), une partie de séparation (54) étant associée au dispositif d'embrayage (12) et séparant essentiellement l'un de l'autre les deux parcours d'écoulement de telle sorte que la fraction principale de l'écoulement de fluide de refroidissement qui suit le premier parcours d'écoulement (50) traverse la zone de frottement (20), **caractérisé en ce que**
la partie de séparation (54) peut être ouverte ou fermée partiellement pour séparer le premier parcours d'écoulement (50) et le deuxième parcours d'écoulement (52) lorsqu'il existe un rapport défini entre les vitesses de rotation du côté d'entraînement (14) et du côté entraîné (16), de sorte qu'au moins une partie du deuxième écoulement (56) de fluide de refroidissement puisse s'écouler dans la partie de séparation.

2. Dispositif de transmission d'un couple de rotation selon la revendication 1, **caractérisé en ce qu'**une soupape (60) qui permet un passage, le diminue ou le bloque en fonction de la différence de pression entre un premier côté de la partie de séparation (54) et un deuxième côté de la partie de séparation (54) est disposée sur la partie de séparation (54).

3. Dispositif de transmission d'un couple de rotation selon la revendication 2, **caractérisé en ce que** l'intensité du deuxième écoulement (56) de fluide de refroidissement dépend du rapport entre les vitesses de rotation côté d'entraînement (14) et du côté entraîné (16) et **en ce que** le degré d'ouverture de la soupape (60) se modifie en fonction du rapport entre les vitesses de rotation.

4. Dispositif de transmission d'un couple de rotation selon les revendications 1 à 3, **caractérisé en ce qu'**un effet de transport de fluide peut être obtenu par un composant associé au dispositif d'embrayage et disposé sur ce dernier.

5. Dispositif de transmission d'un couple de rotation selon la revendication 4, **caractérisé en ce que** le deuxième écoulement de fluide de refroidissement est soutenu par l'effet de transport de fluide.

6. Dispositif de transmission d'un couple de rotation selon les revendications 1 à 5, **caractérisé en ce que** l'écoulement de fluide de refroidissement traverse la zone de frottement (20) de l'intérieur à l'extérieur dans le sens radial.

7. Dispositif de transmission d'un couple de rotation selon les revendications 1 à 6, **caractérisé en ce qu'**une troisième ouverture de passage (46) est prévue pour actionner un piston (30) du dispositif d'embrayage (12) .
